# EUROPEAN PATENT APPLICATION

(11) **EP 3 554 053 A1**
(43) Date of publication of application: **16.10.2019**
(21) Application number: 19168276.4
(22) Date of filing: 09.04.2019
(51) Int. Cl.: H04L 29/08, H04W 84/00

(54) **USER PLANE FUNCTION IN EDGE NETWORK**

(30) Priority: 09.04.2018 US 201862654555 P
(71) Applicant: Frydman, Daniel Nathan, 32447 Haifa (IL); Fite, Lior, Zurit (IL)
(72) Inventor: Frydman, Daniel Nathan, 32447 Haifa (IL); Fite, Lior, Zurit (IL)
(74) Representative: Regimbeau

(57) **Abstract**

The present patent application relates to and discloses methods, circuits, devices, systems and functionally associated computer executable code for enabling applications to run at or near the edge of wireless or mobile communication network. According to some embodiments, there may be provided a UPF proxy at or near an edge of a network which communicates with network elements at or near a core of the network. The UPF proxy may enable applications, such as application server applications, to run on computing resources at edge of the network.

## Description

### FIELD OF THE INVENTION

The present invention generally relates to the field of wireless communication. More specifically, the present invention relates to methods, circuits, devices, assemblies and systems and functionally associated computer executable code for enabling server-side applications to run at or near the edge of a mobile communication system.

### BACKGROUND

Edge Computing is a new concept in Software Defined Networking and Virtualization Technology which is revolutionizing the way communication networks are designed, implemented and operated. The concept focuses on moving computing power and storage to the edge of the network and connecting User Equipment (UE) to applications residing on these edge platformers or on enterprise networks, without the need to pass the data traffic through the network core.

5G networks and 4G networks that include Control and User Plane Separation (CUPS) also include a User Plane Function (UPF), or SGW-U + PGW-U in earlier releases, that is responsible for terminating and steering required traffic towards an external data network (Internet, enterprise etc.). Due to mobility problems, network complexity and price of this functionality, a UPF is only intended to be implemented in central locations in the network. When considering applications that need to run at the edge of the network in close proximity to the devices, due to low latency requirements or any other reason, a UPF located in a central location will not suffice.

It would be advantageous to have a "light weight extension" to the UPF that can be distributed at edge locations of a mobile communication network. It would be advantageous to have methods and systems for providing a selective UPF proxy that can be located at the edge of the network enabling applications with special requirements to run there in a completely transparent way regarding network aspects such as mobility, lawful interception (LI), charging and policy.

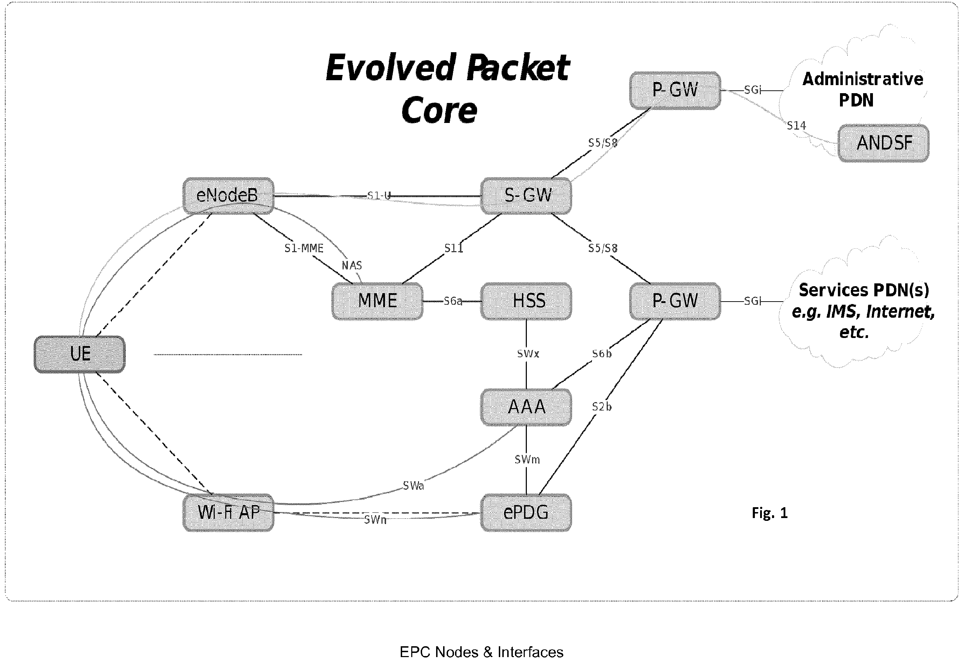

Illustration and description of various wireless/mobile communication network elements may be described in conjunction with the Fig. 1. The following is an explanation of various network terms and abbreviations.

Packet Forwarding Control Protocol (PFCP) is a 3GPP protocol used on the Sx/N4 interface between the control plane and the user plane function, specified in TS 29.244[1]. It is one of the main protocols introduced in the 5G Next Generation Mobile Core Network (aka 5GC[2]), but also used in the 4G/LTE EPC to implement the Control and User Plane Separation (CUPS)[3]. PFCP and the associated interfaces seek to formalize the interactions between different types of functional elements used in the Mobile Core Networks as deployed by most operators providing 4G, as well as 5G, services to mobile subscribers. These 2 types of components are:

The Control Plane (CP) functional elements, handling mostly signaling procedures (e.g. network attachment procedures, management of User-data Plane paths and even delivery of some light-weight services as SMS)

The User-data Plane (UP) functional elements, handling mostly packet forwarding, based on rules set by the CP elements (e.g. packet forwarding for IPv4, IPv6 - or possibly even Ethernet with future 5G deployments - between the various supported wireless RANs and the PDN representing the Internet or an enterprise network).

PFCP's scope is similar to that of OpenFlow, however it was engineered to serve the particular use-case of Mobile Core Networks. PFCP lacks the same general-purpose targets, describing well the 3GPP-specific functional basic blocks of packet forwarding used in 2G, 3G, 4G/LTE, Non-3GPP WiFi and 5G networks.

System Architecture Evolution (SAE) is the core network architecture of 3GPP's LTE wireless communication standard.

SAE is the evolution of the GPRS Core Network, with some differences:
simplified architecture
all-IP Network (AIPN)
support for higher throughput and lower latency radio access networks (RANs)
support for, and mobility between, multiple heterogeneous access networks, including E-UTRA (LTE and LTE Advanced air interface), 3GPP legacy systems (for example GERAN or UTRAN, air interfaces of GPRS and UMTS respectively), but also non-3GPP systems (for example WiFi, WiMAX or cdma2000)

The SAE has a flat, all-IP architecture with separation of control plane and user plane traffic. The main component of the SAE architecture is the Evolved Packet Core (EPC), also known as SAE Core. The EPC serves as the equivalent of GPRS networks (via the Mobility Management Entity, Serving Gateway and PDN Gateway subcomponents). The constituents of an EPC are:
**MME (Mobility Management Entity):** The MME is the key control-node for the LTE access-network. It is responsible for idle mode UE (User Equipment) paging and tagging procedure including retransmissions. It is involved in the bearer activation/deactivation process and is also responsible for choosing the SGW for a UE at the initial attach and at time of intra-LTE handover involving Core Network (CN) node relocation. It is responsible for authenticating the user (by interacting with the HSS). The Non-Access Stratum (NAS) signaling terminates at the MME and it is also responsible for generation and allocation of temporary identities to UEs. It checks the authorization of the UE to camp on the service provider's Public Land Mobile Network (PLMN) and enforces UE roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming UEs.
**SGW (Serving Gateway):** The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PGW). For idle state UEs, the SGW terminates the downlink data path and triggers paging when downlink data arrives for the UE. It manages and stores UE contexts, e.g. parameters of the IP bearer service, network internal routing information. It also performs replication of the user traffic in case of lawful interception.
**PGW (PDN Gateway):** The PDN Gateway provides connectivity from the UE to external packet data networks by being the point of exit and entry of traffic for the UE. A UE may have simultaneous connectivity with more than one PGW for accessing multiple PDNs. The PGW performs policy enforcement, packet filtering for each user, charging support, lawful interception and packet screening. Another key role of the PGW is to act as the anchor for mobility between 3GPP and non-3GPP technologies such as WiMAX and 3GPP2 (CDMA 1X and EvDO).
**HSS (Home Subscriber Server):** The HSS is a central database that contains user-related and subscription-related information. The functions of the HSS include functionalities such as mobility management, call and session establishment support, user authentication and access authorization. The HSS is based on pre-Rel-4 Home Location Register (HLR) and Authentication Center (AuC).
**ANDSF (Access Network Discovery and Selection Function):** The ANDSF provides information to the UE about connectivity to 3GPP and non-3GPP access networks (such as Wi-Fi). The purpose of the ANDSF is to assist the UE to discover the access networks in their vicinity and to provide rules (policies) to prioritize and manage connections to these networks.
**ePDG (Evolved Packet Data Gateway):** The main function of the ePDG is to secure the data transmission with a UE connected to the EPC over an untrusted non-3GPP access. For this purpose, the ePDG acts as a termination node of IPsec tunnels established with the UE.

### SUMMARY OF INVENTION

Embodiments of the present invention may include instancing and running server-side applications at the edge of mobile networks, either 5G networks or 4G networks with Control & User plan separation (CUPS). The CUPS User Plane Function (UPF) in these networks (or SGW-U + PGW-U in earlier releases), among other things, acts as the termination point of the user plane session in the network and steers specific traffic towards the external data network according to rules received from the control plane. Since CUPS is generally implemented in a central location of a mobile communication network, at or near the core of the network, the CUPS cannot provide needed functionality for server applications running at the network edge of the mobile communication network. Embodiments of the present invention may provide methods, circuits, devices, systems and functionally associated computer executable code to extend a CUPS reach to an edge of the mobile communication network, optionally in a simple and relatively inexpensive manner. Embodiments of the present invention may enable applications to run at the edge of a communication network in a transparent way for the network.

Embodiments of the present invention may include methods, circuits, devices, systems and functionally associated computer executable code to provide a selective User Plane Function (UPF) Proxy that can be located at or near the edge of a mobile communication network. The edge of a mobile communication network in accordance with embodiments of the present invention may include computational, storage and communication resources located at or near the radio access network segment of the mobile communication network upon which the UPF proxy may be instanced and run. The computational, storage and communication resources located at or near the radio access network segment of the mobile communication network may support the running of edge located applications, such as server-side applications. A UPF proxy according to embodiments of the present invention may enable an application, such as a server-side application, with special requirements (e.g. low latency in communication with client-side applications running on client devices connected to the network) to run at the edge of the network while maintaining transparency with regard to network services such as mobility, lawful interception (LI), charging and policy.

The present patent application relates to and discloses methods, circuits, devices, systems and functionally associated computer executable code for enabling applications to run at or near the edge of wireless or mobile communication network. According to some embodiments, there may be provided a UPF proxy at or near an edge of a network which communicates with network elements at or near a core of the network. The UPF proxy may enable applications, such as application server applications, to run on computing resources at edge of the network.

According to embodiments, there may be provided a wireless communication network comprising a communication network core may include one or more network management elements. The network may include at least one radio access network segment functionally associated with edge computing resources to host an application providing digital service to one or more mobile communication devices (UE's) communicatively coupled to said radio access network segment. The network may include a User Plane Function (UPF) proxy.

According to some embodiment, the UPF proxy is communicating with one or more network management elements. The UPF proxy may be communicating with a UPF closer to said network core. The UPF proxy may enable Legal Inspection of data traffic between the edge hosted application and the UE receiving digital service from the edge hosted application. The UPF proxy may enable billing of data traffic between the edge hosted application and the UE receiving digital service from the edge hosted application.

### BRIEF DESCRIPTION OF THE FIGURES

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Figs. 1 is a functional block diagram of an evolved packet core used to explain network related terms introduced in the background of the present application;
Figs. 2A & 2B are corresponding functional block and signal flow diagram of a 4G network related solution in accordance with embodiments of the present invention; and
Figs. 3A & 3B are corresponding functional block and signal flow diagram of a 5G network related solution in accordance with embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE FIGURES

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, may refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In addition, throughout the specification discussions utilizing terms such as "storing", "hosting", "caching", "saving", or the like, may refer to the action and/or processes of 'writing' and 'keeping' digital information on a computer or computing system, or similar electronic computing device, and may be interchangeably used. The term "plurality" may be used throughout the specification to describe two or more components, devices, elements, parameters and the like.

Some embodiments of the invention, for example, may take the form of an entirely hardware embodiment, an entirely software embodiment, or an embodiment including both hardware and software elements. Some embodiments may be implemented in software, which includes but is not limited to firmware, resident software, microcode, or the like.

Furthermore, some embodiments of the invention may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be an electronic, magnetic, optical, electromagnetic, infrared, or semiconductor system (or apparatus or device) or a propagation medium. Some demonstrative examples of a computer-readable medium may include a semiconductor or solid state memory, magnetic tape, a removable computer diskette, a random access memory (RAM), a read-only memory (ROM), any composition and/or architecture of semiconductor based Non-Volatile Memory (NVM), any composition and/or architecture of biologically based Non-Volatile Memory (NVM), a rigid magnetic disk, and an optical disk. Some demonstrative examples of optical disks include compact disk - read only memory (CD-ROM), compact disk - read/write (CD-R/W), and DVD.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other functionally suitable components may be used.

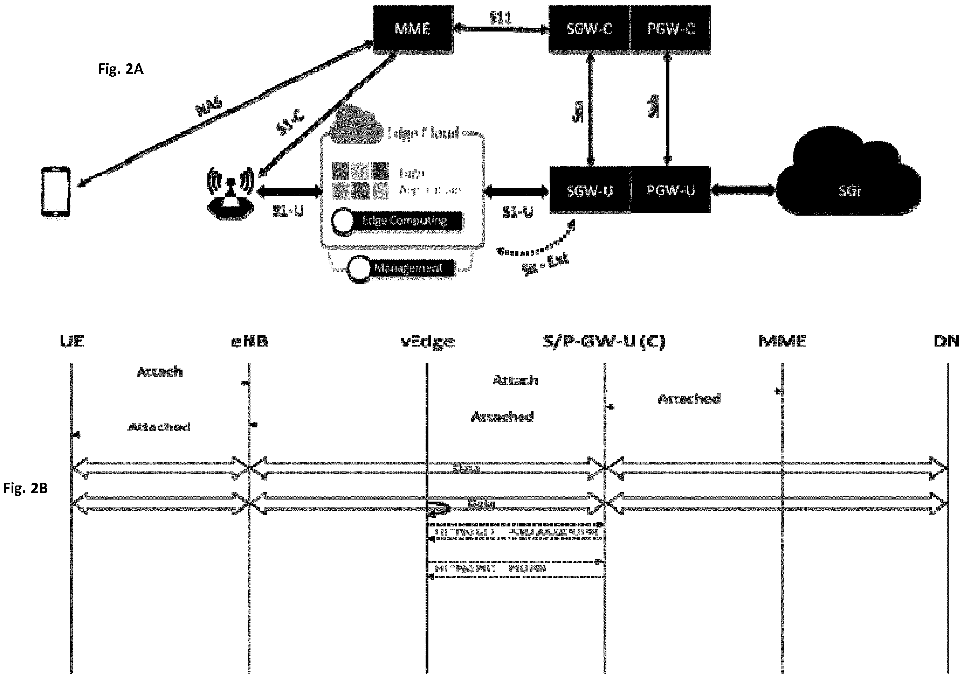

Turning now to Fig. 2A, there is shown an optional CUPS solution within a 4G network based on SGW-C/SGW-U separation, including the edge computing element at the edge of the network. The edge computing element interfaces with the SGW-U element over a proprietary protocol (Sx-Ext) for passing back and forth any specific information required to run the applications at the edge in a transparent manner.

Embodiments of the present invention may use Sx_Ext uses HTTP(s) protocol or any other networking/messaging protocol for sending/receiving Sxa information as follows:
For example Information received using HTTP(s) GET - PDR, FAR, QER, URR
For example Information sent back using HTTP(s) PUT - PD, URR

Where the acronyms which are defined under 3GPP terminology means:
PDR - Packet Detection Rule
FAR - Forwarding Action Rule
QER - QoS Enforcement Rule
URR - Usage Reporting Rule
PD - Packet Duplication

Turning now to Fig. 2B, there is shown a signaling or ladder diagram illustrating an exemplary process of steering UE traffic to an external data network in accordance with embodiments of the present invention corresponding to Fig. 2A.

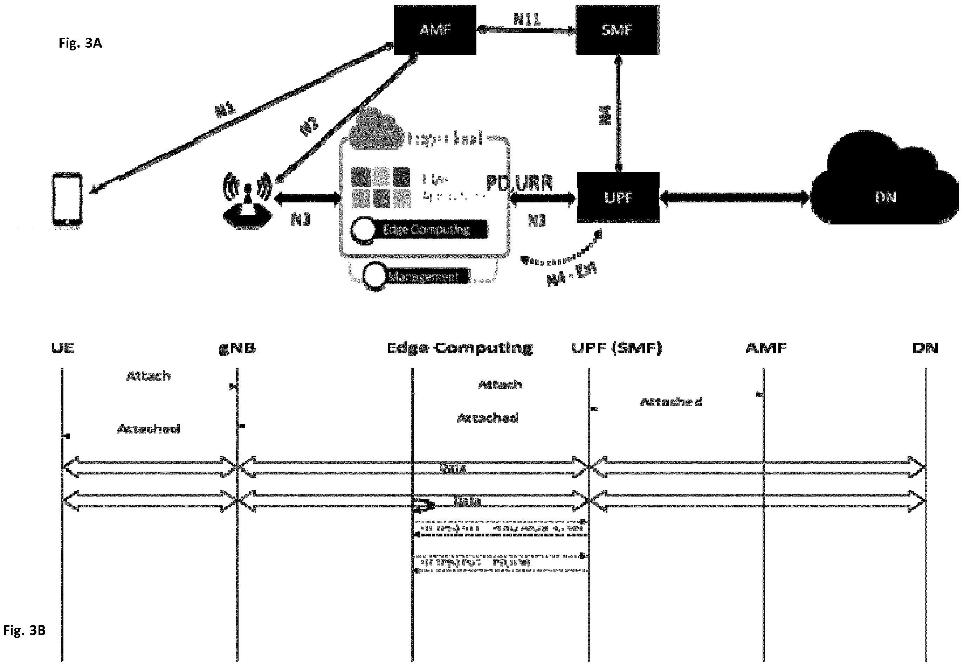

Turning now to Fig. 3A, there is shown describes an optional 5G network or a CUPS solution in a 4G network, including the edge computing element at the edge of the network, which interfaces with a UPF element over a proprietary protocol (Sx-Ext) for passing back and forth any specific information required to run a applications at the edge in a transparent manner.

Embodiments of N4_ Ext uses HTTP(s) protocol or any other networking/messaging protocol for sending/receiving N4 information as follows:
For example information received using HTTP(s) GET - PDR, FAR, QER, URR
For example information sent back using HTTP(s) PUT - PD, URR

Turning now to Fig. 3B, there is shown a signaling or ladder diagram illustrating an exemplary process of steering UE traffic to an external data network in accordance with embodiments of the present invention corresponding to Fig. 3A.

Functions, operations, components and/or features described herein with reference to one or more embodiments, may be combined or otherwise utilized with one or more other functions, operations, components and/or features described herein with reference to one or more other embodiments, or vice versa. While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. A wireless communication network comprising:
a communication network core including one or more network management elements.
at least one radio access network segment functionally associated with edge computing resources to host an application providing digital service to one or more mobile communication devices (UE's) communicatively coupled to said radio access network segment; and
a User Plane Function (UPF) proxy.

2. The wireless communication network according to claim 1, wherein said UPF proxy is communicating with one or more network management elements.

3. The wireless communication network according to claim 2, wherein said UPF proxy is communicating with a UPF closer to said network core.

4. The wireless communication network according to claim 2, wherein said UPF proxy enables Legal Inspection of data traffic between the edge hosted application and the UE receiving digital service from the edge hosted application.

5. The wireless communication network according to claim 2, wherein said UPF proxy enables billing of data traffic between the edge hosted application and the UE receiving digital service from the edge hosted application.

6. A method of operating a wireless communication network, said method comprising:
within the communication network core, activating one or more network management elements;
within at least one radio access network segment functionally activating edge computing resources to host an application providing digital service to one or more mobile communication devices (UE's) communicatively coupled to said radio access network segment; and
providing a User Plane Function (UPF) proxy.

7. The method according to claim 6, further including causing said UPF proxy to communicate with one or more network management elements.

8. The method according to claim 6, further including causing said UPF proxy is communicate with a relatively UPF closer to said network core.

9. The method according to claim 6, wherein said UPF proxy enables Legal Inspection of data traffic between the edge hosted application and the UE receiving digital service from the edge hosted application.

10. The method according to claim 6, wherein said UPF proxy enables billing of data traffic between the edge hosted application and the UE receiving digital service from the edge hosted application.
